# EUROPEAN PATENT SPECIFICATION

(11) **EP 3 879 083 B1**
(45) Date of publication and mention of the grant of the patent: **26.02.2025**
(21) Application number: 20162024.2
(22) Date of filing: 10.03.2020
(51) Int. Cl.: F01N 3/02, F01N 5/02, F01N 13/00, F01K 3/20

(54) **BOILER AND METHOD OF OPERATING A BOILER**
KESSEL UND VERFAHREN ZUM BETRIEB EINES KESSELS
CHAUDIÈRE ET PROCÉDÉ DE FONCTIONNEMENT D'UNE CHAUDIÈRE

(43) Date of publication of application: 15.09.2021
(73) Proprietor: Alfa Laval Corporate AB, 221 00 Lund (SE)
(72) Inventor: MOSEKAER NIELSEN, Bodil, 9220 AALBORG ØST (DK); SKYTTE JØRGENSEN, Lars, 9362 GANDRUP (DK)
(74) Representative: Alfa Laval Attorneys

(56) References cited:
- EP-A1- 1 795 722
- EP-A1- 3 255 259
- WO-A1-84/00193

## Description

### Technical field

The invention relates to a boiler for transferring heat from exhaust gas to a medium, and its design. The invention also relates to a method of operating such a boiler.

### Background art

Boilers are well-known and used in many different heat exchange applications. For example, a boiler may be arranged after an exhaust gas source in the form of an engine to recover heat from exhaust gas produced by the engine. Such a boiler is often referred to as a heat recovery boiler. In such a boiler, a medium, typically water, conveyed through the boiler is heated by means of heat from the engine exhaust gas conveyed through the boiler. The engine may typically be operated at different loads, and the boiler is normally dimensioned for operation at any engine load, including operation at full, i.e. 100%, engine load. One dimensioning criterion for the boiler may be the boiler exhaust gas pressure drop, and the boiler may be so dimensioned that the boiler exhaust gas pressure drop never exceeds 150mmWC. Typically, the higher the engine load is, the higher the boiler exhaust gas pressure drop is. Thus, the boiler exhaust gas pressure drop is typically the highest at full engine load. However, in reality, the engine is typically not run at full load but rather at 55-85% of the full load which results in a boiler exhaust gas pressure drop considerably lower than 150mmWC. Consequently, the boiler will be over-dimensioned in most cases which makes the boiler unnecessarily expensive and bulky. Further, in many applications, steam will be produced during operation of the boiler, which steam can be used for different purposes if needed. However, if more steam than needed is produced, which typically could be the case during full engine load, steam has to be dumped. Therefore, the boiler is typically connected to equipment for dumping steam. Also this equipment is normally dimensioned for operation at any engine load and therefore over-dimensioned in most cases, and thus unnecessarily expensive and bulky.

WO8400193 discloses a water tube boiler comprising water tube spirals. The space inside the innermost tube spiral is used as an exhaust gas by-pass channel in the boiler. The exhaust gas flow through the by-pass channel is controlled by means of a regulating means.

EP1795722 discloses an exhaust apparatus of an internal combustion engine having two flow passages forming an exhaust flow passage connected to the internal combustion engine. The exhaust apparatus further comprises a valve member for controlling the exhaust flow through the flow passages.

EP3255259 discloses an exhaust heat recovery system comprising an exhaust heat recovery unit disposed in an engine exhaust pipe, upstream and downstream flow paths for circulating a coolant between the exhaust heat recovery unit and the engine, a bypass flow path that communicates the upstream flow path to the downstream flow path to bypass the engine, and a valve arranged to adjust the flow in the bypass flow path.

### Summary

An object of the present invention is to provide a boiler and a method of operating a boiler that at least partly solves the problems above. The basic concept of the invention is to dimension the medium and exhaust gas conveying means of the boiler, not for full exhaust gas source load, but rather for a typical exhaust gas source load, known as design load, and to provide the boiler with dedicated means for taking care of excess exhaust gas resulting from operation above the typical exhaust gas source load. The boiler and the method for achieving the object above is defined in the appended claims and discussed below.

A boiler according to the invention is arranged for transferring heat from exhaust gas or flue gas to a medium. The boiler comprises an exhaust gas inlet for receiving exhaust gas from an external first exhaust gas source, a first exhaust gas outlet for discharging exhaust gas from the external first exhaust gas source, and means for conveying exhaust gas from the external first exhaust gas source from said exhaust gas inlet to said first exhaust gas outlet. The boiler further comprises a medium inlet for receiving the medium, a medium outlet for discharging the medium, and means for conveying the medium from said medium inlet to said medium outlet. The boiler further comprises a bypass pipe for conveying exhaust gas from the external first exhaust gas source, from said exhaust gas inlet to said first exhaust gas outlet. The bypass pipe is enclosed by a circumferential wall of the boiler. Further, the boiler comprises a bypass regulator arranged to block or unblock the bypass pipe to regulate an exhaust gas flow through the bypass pipe. The boiler is characterized in that it comprises first pressure sensor for measuring a first exhaust gas pressure upstream the bypass pipe. Also, the boiler comprises a control unit communicating with the first pressure sensor and the bypass regulator and arranged to control the bypass regulator in dependence on said first pressure.

The boiler can be arranged for land-based or marine applications. The boiler may be installed onboard a moving vessel, such as a ship.

The medium to be heated can be any suitable medium, for example water. The medium may, or may not, change phases, such as go from liquid to gaseous phase, partly or completely, on its way through the boiler. For example, the medium inlet may be arranged to receive the medium at least partly in liquid phase, e.g. in the form of water, while the medium outlet may be arranged to discharge the medium at least partly in gaseous phase, e.g. in the form of steam.

The external first exhaust gas source may be of any suitable type, such as a diesel engine or a turbine.

Herein, the expression "conveying from an inlet to an outlet" and similar means "conveying in a direction from an inlet to an outlet" and not necessarily all the way from the inlet and all the way to the outlet. Thus, said means for conveying exhaust gas, said means for conveying the medium and said bypass pipe may, but need not, extend all the way between the respective inlets and outlets.

Since the bypass pipe is enclosed by the circumferential wall of the boiler, it may be arranged internally within the boiler. Such an internal bypass pipe may enable a compact and cost efficient design of the boiler, as well as a relatively short exhaust gas path between said exhaust gas inlet to said first exhaust gas outlet of the boiler. In turn, this may enable a relatively low pressure drop for exhaust gas flowing through the boiler. Further, such an internal bypass may be associated with relatively low thermal stresses in the boiler, as will be further discussed below. Moreover, such an internal bypass may enable use of a mechanically simple, compact and economical bypass regulator.

The circumferential wall can have any suitable shape, such as the shape of a tube with circular, oval, polygonal, rectangular, etc. , cross-section. The circumferential wall may further have any suitable design, such as be solid or hollow, and/or have a uniform or non-uniform thickness. As an example, the circumferential wall may be a so-called panel wall comprising a number of parallel tubes connected by means of solid wall portions. A cooling medium may be fed through these tubes for cooling exhaust gas conveyed through the boiler.

The components of the boiler could be made of any suitable material, for example carbon steel, stainless steel or aluminum.

The bypass pipe may have any suitable design, such as be straight or curved and have a circular or oval or polygonal cross section.

As said above, the bypass regulator is arranged to block or unblock the bypass pipe. Herein, "block" means "completely close" while "unblock" means "completely or partly open".

As used herein, "upstream" means "before" while "downstream" means "after", with respect to an exhaust gas flow direction. Thus, the first pressure sensor is arranged somewhere between the external first exhaust gas source and the bypass pipe of the boiler.

As used herein, "communicating" and similar means "communicating directly or indirectly". The communication can be wired or wireless.

As said above the control unit is arranged to control the bypass regulator in dependence on said first pressure. The first pressure may, or may not, be the only variable used by the control unit to control the bypass regulator.

At loads up to the typical load of the external first exhaust gas source for which the boiler is dimensioned, exhaust gas from the external first exhaust gas source may be fed through the boiler by said means for conveying exhaust gas. At higher loads, excess exhaust gas from the external first exhaust gas source may be fed through the boiler via the bypass pipe. The first exhaust gas pressure measured between the external first exhaust gas source and the bypass pipe of the boiler is dependent on the load of the external first exhaust gas source. By controlling the bypass regulator in dependence on said first exhaust gas pressure, the exhaust gas flow through the bypass pipe may be optimized. Thus, the provision of the bypass pipe makes it possible to dimension the rest of the boiler, as well as any steam dumping equipment connected thereto, based on a typical, instead of a maximum, load of the external first exhaust gas source, which is cost and space efficient.

The boiler may be so constructed that said means for conveying exhaust gas from said exhaust gas inlet to said first exhaust gas outlet comprise a first bundle of tubes. Further, said means for conveying the medium from said medium inlet to said medium outlet may comprise said circumferential wall of the boiler enclosing said first bundle of tubes.

The tubes, the bypass pipe and the circumferential wall could be made of the same material to get essentially the same temperature during operation of the boiler, which may enable relatively low thermal stresses in the boiler.

The tubes may have any suitable design, such as be straight, curved or coil- or helix-shaped and have a circular or oval or polygonal cross section, and the tubes may be similar or different from each other. The tubes may be provided with surface-enlarging elements, such as spiral fins, plate fins, or fins of any other suitable design.

The number of tubes may be two or more and they may extend along, and possibly also parallel to, each other and/or the bypass pipe.

Each of the tubes may have an inner volume which is smaller than an inner volume of the bypass pipe.

According to this embodiment, exhaust gas is fed through the boiler in tubes surrounded by the medium to be heated which is enclosed by said circumferential wall of the boiler, and heat exchange between exhaust gas and the medium is taking place through walls of the tubes. Such a boiler may be referred to as a smoke tube boiler. In dimensioning such a smoke tube boiler for a typical instead of a full load of the external first exhaust gas source, the number of tubes may be reduced which could make the boiler less costly and less space demanding even with the bypass pipe present. A reduced number of tubes means an increased exhaust gas velocity through the tubes, which, in turn, results in an increased efficiency of the heat transfer between exhaust gas and the medium, and also decreased formation of deposits on the tube inside walls. Further, the tubes of such a smoke tube boiler may be efficiently cleaned when the external first exhaust gas source is run at high load by rapidly cutting-off the exhaust gas flow through the bypass pipe by means of the bypass regulator to increase the exhaust gas velocity through the tubes for a short while to "blow them out", before again allowing an exhaust gas flow through the bypass pipe. This can be done one time, or repeatedly to create an exhaust gas wave in the tubes.

Instead of being designed as a smoke tube boiler, the boiler may be so constructed that said means for conveying the medium from said medium inlet to said medium outlet comprise one or more tubes. Further, said means for conveying exhaust gas from said exhaust gas inlet to said first exhaust gas outlet may comprise said circumferential wall of the boiler enclosing said one or more tubes.

Also these one or more tubes may have any suitable design, such as be straight, curved or coil- or helix-shaped and have a circular or oval or polygonal cross section, be similar or different from each other, extend along, and possibly also parallel to, each other and/or the bypass pipe, and be provided with surface-enlarging elements of any suitable design.

According to this embodiment, the medium to be heated is fed through the boiler in tubes surrounded by exhaust gas from the external first exhaust gas source, which exhaust gas is enclosed by said circumferential wall of the boiler, and heat exchange between exhaust gas and the medium is taking place through walls of the tubes. If the medium is water, such a boiler may be referred to as a water tube boiler.

The boiler may further comprise a second pressure sensor for measuring a second exhaust gas pressure downstream the bypass pipe. Further, the control unit may further communicate with the second pressure sensor and be arranged to control the bypass regulator also in dependence on said second pressure. Different external factors may affect the first and second pressures. By controlling the bypass regulator in dependence on both the first and second pressures, such external factors may be "cancelled" and the bypass regulator may be controlled in dependence on the conditions in the boiler only.

The first and second pressures may, or may not, be the only variables used by the control unit to control the bypass regulator. As an example, the control unit may be arranged to control the bypass regulator in dependence on a difference between the first pressure and the second pressure.

The second pressure sensor may have different positions. For example, the second pressure sensor may be arranged upstream the first exhaust gas outlet of the boiler, i.e. between the fist exhaust gas outlet and the bypass pipe. Such a position facilitates the provision of the second pressure sensor as an integrated component of the boiler.

Also the first pressure sensor may have different positions. As an example, the first pressure sensor may be arranged downstream the exhaust gas inlet of the boiler, i.e. between exhaust gas inlet and bypass pipe. Such a position facilitates the provision of the first pressure sensor as an integrated component of the boiler. As another example, the first pressure sensor may be arranged upstream the exhaust gas inlet of the boiler for measuring the first exhaust gas pressure before the boiler, i.e. between the external first exhaust gas source and the exhaust gas inlet of the boiler. Such a position may enable a more accurate measurement of the first exhaust gas pressure and may render it possible to directly measure an engine back pressure.

The bypass pipe may comprise an exhaust gas inlet for receiving exhaust gas and an exhaust gas outlet for discharging exhaust gas. Further, the bypass regulator may be arranged to cover one of the exhaust gas inlet and the exhaust gas outlet of the bypass pipe to block the bypass pipe. Such a bypass regulator may block the bypass pipe from the outside, which could enable a mechanically straightforward, reliable and accessible construction of the bypass regulator.

While the bypass regulator could be arranged to cover one of the exhaust gas inlet and the exhaust gas outlet of the bypass pipe, the other one of the exhaust gas inlet and the exhaust gas outlet of the bypass pipe could be arranged to be constantly open. This may enable a relatively uncomplicated design of the boiler and still a satisfactory control of the exhaust gas flow through the bypass pipe.

According to one embodiment, the bypass regulator is arranged to cover the exhaust gas outlet of the bypass pipe to block the bypass pipe. This embodiment provides a relatively mild environment for the bypass regulator since the temperature is typically lower at the exhaust gas outlet than at the exhaust gas inlet of the bypass pipe. In an alternative embodiment, the bypass regulator could instead be arranged to cover the exhaust gas inlet of the bypass pipe to block the bypass pipe.

The bypass regulator can have any suitable design. As an example, the bypass regulator may comprise a butterfly damper which may enable a mechanically straightforward, reliable and accessible construction of the bypass regulator.

The boiler may further comprise a third pressure sensor for measuring a steam pressure of steam discharged from the medium outlet. Further, the control unit may further communicate with the third pressure sensor and be arranged to control the bypass regulator also in dependence on said steam pressure.

The first pressure and the steam pressure may, or may not, be the only variables used by the control unit to control the bypass regulator.

Steam generated by the boiler and discharged from the medium outlet may be used for different purposes if needed. The steam generated but not needed is hereinafter referred to as excess steam. The amount of steam generated can be regulated by regulating the exhaust gas flow through the bypass pipe. More particularly, by increasing the exhaust gas flow through the bypass pipe, the generation of steam may be decreased, and vice versa. The more excess steam that is generated, the higher said steam pressure is. By controlling the bypass regulator in dependence on said steam pressure, the generation of steam may be adapted to the actual need. Consequently, production of excessive steam may be limited which, in turn, makes it possible to scale down equipment for handling excessive steam, such as steam dumping equipment.

According to one embodiment, the boiler further comprises a connection, communicating with said medium outlet, for dumping of steam discharged from the medium outlet, and a steam flow meter arranged to measure the amount of steam to be dumped. Further, the control unit communicates with the steam flow meter and is arranged to control the bypass regulator also in dependence on said amount of steam.

The first pressure and the amount of steam measured by the steam flow meter may, or may not, be the only variables used by the control unit to control the bypass regulator.

According to this embodiment, instead of, or in addition to, measuring the steam pressure and use this to control the bypass regulator as described above, the amount of steam to be dumped is measured and used to control the bypass regulator.

The boiler may further comprise a second exhaust gas outlet for discharging exhaust gas from a second exhaust gas source, and a second bundle of tubes for conveying exhaust gas from the second exhaust gas source to said second exhaust gas outlet, said circumferential wall of the boiler enclosing said second bundle of tubes. Such a boiler may be referred to as a composite boiler.

Also the tubes of the second bundle could be two or more, extend along and possibly also parallel to each other and/or the bypass pipe, be made of any suitable material, have any suitable design, be similar or different from each other, and each have an inner volume which is smaller than an inner volume of the bypass pipe.

In such a composite boiler, exhaust gas from the second exhaust gas source is fed through the boiler in tubes surrounded by the medium and contributes to the heating of the medium. The second exhaust gas source may be of any suitable type, such as an oil and/or gas fired burner.

The inventive method of operating a boiler to transfer heat from exhaust gas to a medium, comprises the steps of conveying exhaust gas from an external first exhaust gas source from an exhaust gas inlet to a first exhaust gas outlet of the boiler, and conveying the medium from a medium inlet to a medium outlet of the boiler. The method is characterized in further comprising the steps of measuring a first exhaust gas pressure upstream a bypass pipe of the boiler, which bypass pipe is arranged to convey exhaust gas from the external first exhaust gas source from said exhaust gas inlet to said first exhaust gas outlet, and regulating, in dependence on said first exhaust gas pressure, an exhaust gas flow through the bypass pipe.

The method may further comprise the steps of measuring a second exhaust gas pressure downstream the bypass pipe, and regulating, also in dependence on said second pressure, the exhaust gas flow through the bypass pipe.

The method may further comprise the steps of measuring a steam pressure of steam discharged from the medium outlet, and regulating, also in dependence on said steam pressure, the exhaust gas flow through the bypass pipe.

The method may further comprise the step of measuring an amount of steam, discharged from the medium outlet, to be dumped, and regulating, also in dependence on said amount of steam, the exhaust gas flow through the bypass pipe.

The above discussed advantages of the different embodiments of the boiler according to the invention are naturally transferable to the different embodiments of the method according to the invention.

Still other objectives, features, aspects and advantages of the invention will appear from the following detailed description as well as from the drawings.

### Brief description of the drawings

The invention will now be described in more detail with reference to the appended schematic drawings, in which
Fig. 1a illustrates an engine and a schematic cross section of a boiler according to a first embodiment,
Fig. 1b illustrates a schematic top view of a part of the boiler according to the first embodiment,
Fig. 2 illustrates an engine and a schematic cross section of a boiler according to a second embodiment,
Fig. 3 illustrates an engine and a schematic cross section of a boiler according to a third embodiment,
Fig. 4 illustrates an engine and a schematic cross section of a boiler according to a fourth embodiment,
Fig. 5 illustrates a schematic cross section of a boiler according to a fifth embodiment, and
Fig. 6 illustrates a schematic cross section of a boiler according to a sixth embodiment.

### Detailed description

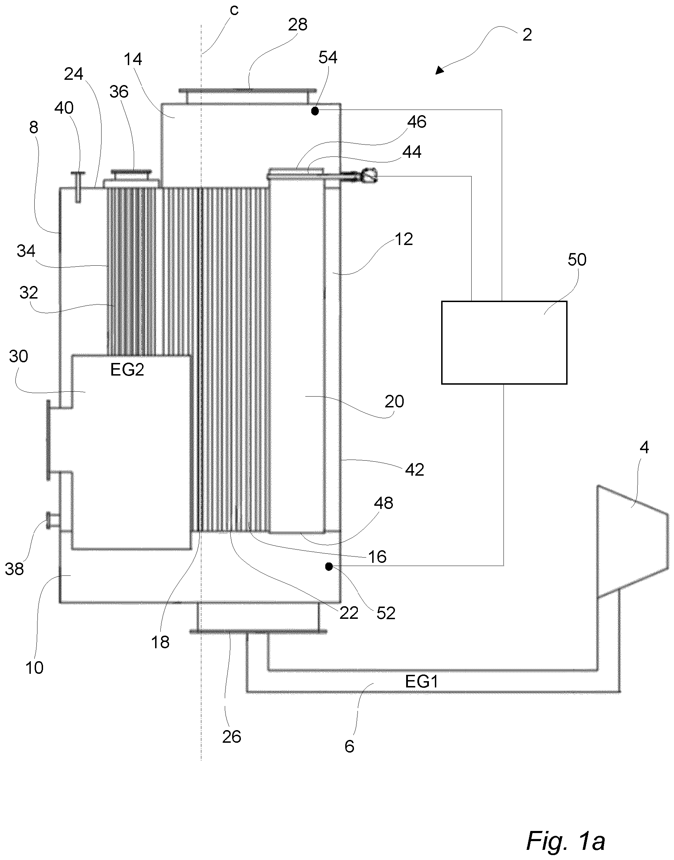

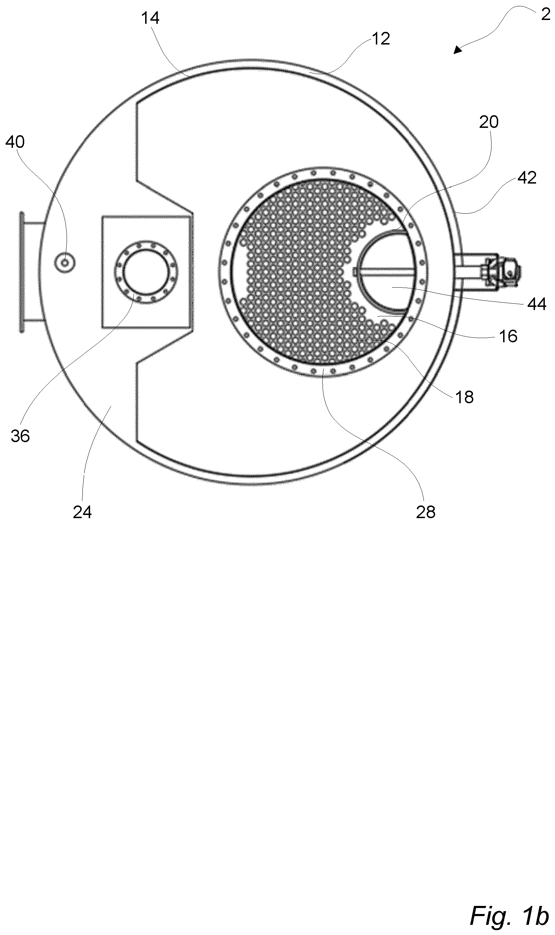

In Figs. 1a and 1b a boiler 2 is illustrated. The boiler 2 is arranged onboard a ship (not illustrated) and connected to an external first exhaust gas source in the form of a diesel engine 4 of the ship by a duct 6. Exhaust gas EG1 generated by the diesel engine 4 is fed through the duct 6 to the boiler 2 for exhaust gas heat recovery. The boiler 2 comprises a carbon steel container 8, in turn comprising a lower chamber or header 10, a housing 12 and an upper chamber or header 14 arranged in succession in a vertical direction. The lower chamber 10 and the housing 12 both have a circular cylindrical form and are integrally formed so as to have similar cross sections and be concentrically arranged. The upper chamber 14 have a partly circular cylindrical form and a smaller cross section than the lower chamber 10 and the housing 12.

The boiler 2 further comprises a first bundle 16 of carbon steel tubes 18 and a carbon steel bypass pipe 20 extending inside the container 8 between a lower tube plate 22 and an upper tube plate 24 of carbon steel, which plates form lower and upper walls of the housing 12 separating the housing 12 from the lower and upper chambers 10 and 14. The bypass pipe 20 is partly surrounded by the tubes 18. The tubes 18 and the bypass pipe 20 are straight and extend parallel to each other and to a longitudinal center axis c of the housing 12. The tubes 18 and the bypass pipe 20 all have a circular cross section, and an inner volume of the bypass pipe 20 is considerably larger than an inner volume of each of the tubes 18. The tubes 18 and the bypass pipe 20 are arranged to convey exhaust gas EG1 through the container 8, which exhaust gas EG1 is received by the boiler 2 through an exhaust gas inlet 26 extending into the lower chamber 10 and discharged by the boiler 2 through a first exhaust gas outlet 28 extending out of the upper chamber 14. Exhaust gas EG1 is fed through the exhaust gas inlet 26, into the lower chamber 10, through the tubes 18, and possibly also through the bypass pipe 20 as will be further discussed below, into the upper chamber 14 and through the first exhaust gas outlet 28.

Further, the boiler 2 comprises a furnace 30 arranged inside the container 8 and a second bundle 32 of carbon steel tubes 34 (illustrated in Fig. 1a only) extending inside the housing 12 between the furnace 30 and the upper tube plate 24 of the boiler. The tubes 34 are straight and extend parallel to each other and to a longitudinal center axis c of the housing 12. The tubes 34 all have a circular cross section, and the inner volume of the bypass pipe 20 is considerably larger than an inner volume of each of the tubes 34. The tubes 34 are arranged to convey exhaust gas EG2 from a second exhaust gas source, in the form of an oil-fired burner (not illustrated) arranged inside the furnace 30, through the housing 12 before the exhaust gas EG2 leaves the boiler 2 through a second exhaust gas outlet 36 arranged at the upper tube plate 24.

During operation of the engine 4, the boiler 2 and possible the oil-fired burner, the housing 12 is filled with a medium, here water, which is fed into the housing 12 through a medium inlet 38. Further, exhaust gas EG1 is fed through the tubes 18 and possibly the bypass pipe 20, and exhaust gas EG2 is fed through the tubes 34 if the oil-fired burner is running. The water surrounds and flows around the tubes 18, the tubes 34 and the bypass pipe 20, and since the water is colder than the exhaust gas EG1 and EG2, heat is transferred from the exhaust gas, through walls of the tubes and the furnace, to the water which is heated and leaves the boiler 2, in the form of a mixture of water and steam, through a medium outlet 40. Since a circumferential wall 42 of the housing 8, the tubes 18, the bypass pipe 20 and the tubes 34 are made of the same material and all immersed in a common water volume, their temperatures will differ relatively little, which will cause relatively limited thermal stress in the boiler. Thus, the first bundle 16 of tubes 18 and the bypass pipe 20 serves as means for conveying the exhaust gas EG1 from the exhaust gas inlet 26 to the first exhaust gas outlet 28, while the circumferential wall 42 of the housing 8 serves as means for conveying the medium from the medium inlet 38 to the medium outlet 40.

The diesel engine 4 operates optimally when the boiler exhaust gas pressure drop is 150mmWC or lower. The boiler 2 is so dimensioned that the boiler exhaust gas pressure drop pressure is approximately 150mmWC at a diesel engine design load which is 55-85% of the maximum diesel engine load. When the engine is operated at the design load or lower, the exhaust gas EG1 will be conveyed through the housing 12 through the tubes 18. However, if the diesel engine, for whatever reason, is operated at a load above the design load, the engine exhaust gas EG1 will be conveyed through the housing 12 also through the bypass pipe 20 to avoid an increase of the engine back pressure. The exhaust gas flow through the bypass pipe 20 is regulated by means of a bypass regulator in the form of a butterfly damper 44. The butterfly damper 44 is arranged at an exhaust gas outlet 46 of the bypass pipe 20 to open it and allow passage of exhaust gas EG1, or close it and prevent passage of exhaust gas EG1. In Figs. 1a and 1b the butterfly damper 44 is illustrated closed. An exhaust gas inlet 48 of the bypass pipe 20 is constantly open.

The boiler 2 comprises a control unit 50 connected to the butterfly damper 44 to control the opening and closing of it. The control unit 50 communicates with a first pressure sensor 52 arranged in the lower chamber 10 of the boiler 2 to measure a first exhaust gas pressure therein, and a second pressure sensor 54 arranged in the upper chamber 14 of the boiler 2 to measure a second exhaust gas pressure therein. The difference between the second and first exhaust gas pressures is directly related to the engine back pressure, and the control unit 50 is arranged to control the opening and closing of the butterfly damper 44 in dependence on this pressure difference. Accordingly, if the pressure difference exceeds a pre-set limit value, then the butterfly damper 44 will be open to a degree dependent on the pressure difference. However, if the pressure difference is below the pre-set limit value, then the butterfly damper 44 will be closed.

As mentioned above, the boiler 2 produces steam which leaves the housing 12 through the medium outlet 40. This steam can be used for different purposes onboard the ship. If the steam generated by the exhaust gas EG1 from the diesel engine 4 is not sufficient, the oil-fired burner in the furnace 30 can be operated for generation of additional steam by means of the exhaust gas EG2 from the burner. Naturally, in an alternative embodiment of the boiler, the furnace 30, the second bundle 32 of tubes 34 and the second exhaust gas outlet 36 could be omitted.

Thus, by means of the bypass pipe 20, the butterfly damper 44 and the control unit 50, the boiler exhaust gas pressure drop can be maintained at 150mmWC or lower even when the engine load exceeds the design load. Further, the bypass pipe 20, the butterfly damper 44 and the control unit 50 offer a possibility of effectively cleaning the boiler 2 by operating the engine 4 above the design load, and the boiler 2 with an exhaust gas flow through the bypass pipe 20, before suddenly cutting off the exhaust gas flow through the bypass pipe 20 by means of the butterfly damper 44 to "blow out" deposits from inside the tubes 16.

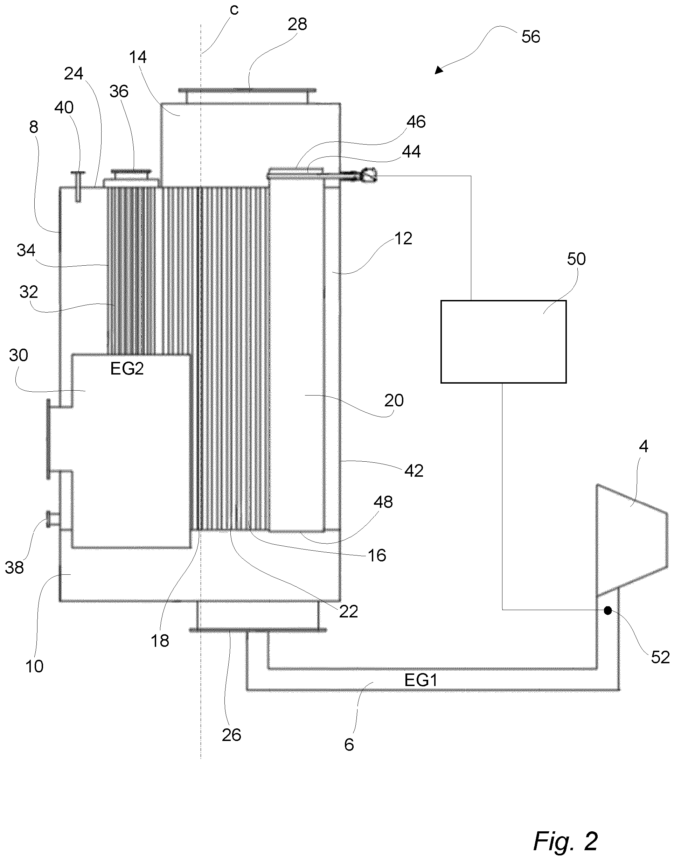

In Fig. 2 another boiler 56 is illustrated. The boiler 56 is very similar to the boiler 2 and hereinafter the distinguishing features of the boiler 56 will be focused on. The boiler 56 comprises the first pressure sensor 52 but lacks the second pressure sensor 54 of the boiler 2. In the boiler 56, the first pressure sensor 52 is positioned directly after the diesel engine 4 and arranged to measure the engine back pressure of the diesel engine 4. The control unit 50 is arranged to control the opening and closing of the butterfly damper 44 in dependence on this engine back pressure.

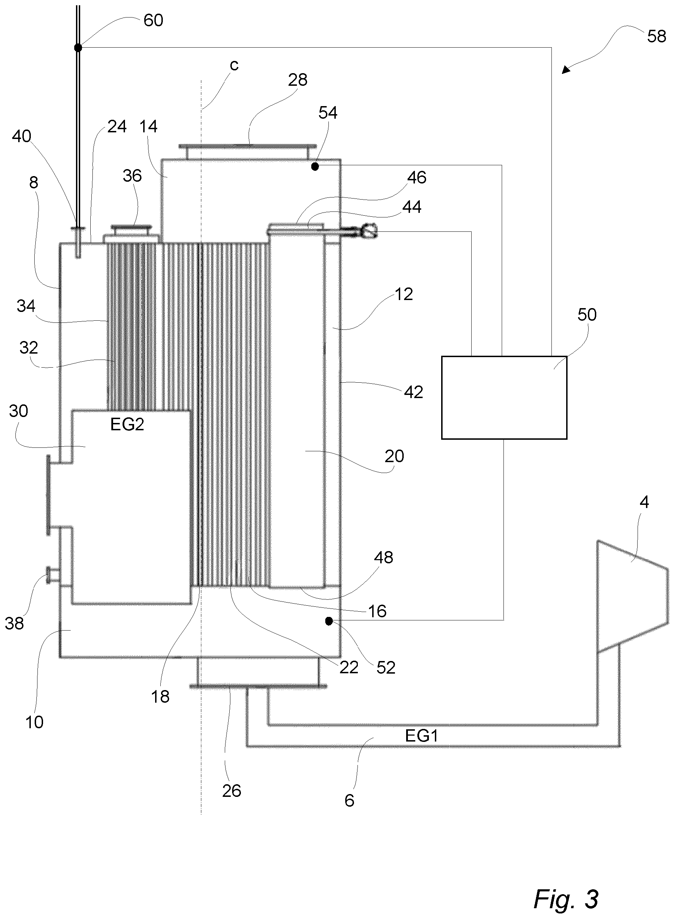

In Fig. 3 another boiler 58 is illustrated. The boiler 58 is very similar to the boiler 2 and hereinafter the distinguishing features of the boiler 58 will be focused on. In accordance with the previous description, liquid water is transformed into steam inside the boiler 58 through heat exchange with the exhaust gas EG1 and possibly the exhaust gas EG2. This steam can be used for different purposes onboard the ship. The more exhaust gas EG1 that is generated by the engine 4, the more steam may be produced by the boiler 58. Further, the more of the generated exhaust gas EG1 that passes through the tubes 18, the more steam is produced. In other words, for a specific engine load, most steam is produced if all the exhaust gas EG1 passes the housing 12 through the tubes 18, and no exhaust gas EG1 passes through the bypass pipe 20, since the exhaust gas flow velocity, and therefore the heat transfer efficiency, will be lower for the bypass pipe 20 than for the tubes 18. If more steam than needed is produced by the boiler 58, the excess steam is dumped by means of steam dumping equipment (not illustrated) connected to the boiler 58. By means of the bypass pipe 20, the production of excess steam can be limited, which means that the steam dumping equipment capacity can be reduced.

Besides the first and second pressure sensors 52 and 54, the boiler 58 comprises a third pressure sensor in the form of a steam pressure sensor 60 arranged at a connection extending from the medium outlet 40 of the boiler 58. The control unit 50 is arranged to communicate with the steam pressure sensor 60 and control the opening and closing of the butterfly damper 44 also in dependence on a steam pressure measured by means of the steam pressure sensor 60. Accordingly, if the steam pressure exceeds a pre-set limit value, then the butterfly damper 44 will be open to a degree dependent on the size of the steam pressure. If the steam pressure is below the pre-set limit value, but the difference between the second and first exhaust gas pressures, measured by the first and second pressure sensors 52 and 54, exceeds the pre-set limit value, then the butterfly damper 44 will be open to a degree dependent on the size of the pressure difference. If the steam pressure is below the pre-set limit value, and the pressure difference is below the pre-set limit value, then the butterfly damper 44 will be closed.

Thus, by means of the bypass pipe 20, the butterfly damper 44 and the control unit 50, the production of steam can be adapted to the actual need for steam such as to reduce the amount of steam that has to be dumped and thereby enable down-scaling of the steam dumping equipment connected to the boiler.

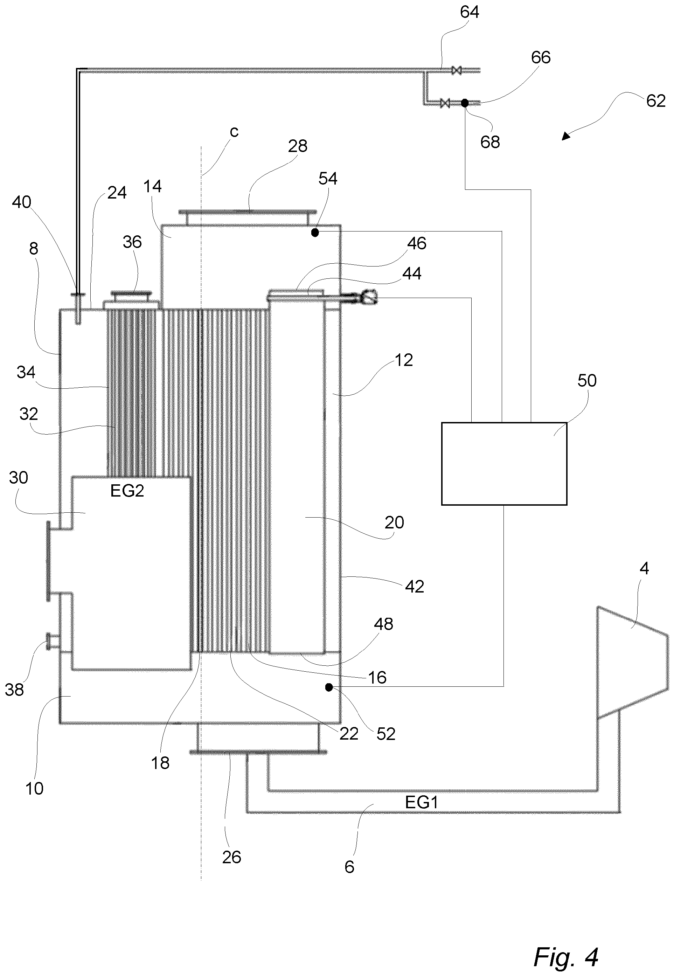

In Fig. 4 another boiler 62 is illustrated. The boiler 62 is very similar to the boiler 58 and hereinafter the distinguishing features of the boiler 58 will be focused on. The steam produced by the boiler 62 and output from the medium outlet 40 is either fed through a connection 64 for use onboard the ship or fed through a connection 66 to be dumped. The boiler 62 comprises a steam flow meter 68 instead of the steam pressure sensor 60 of the boiler 58. The steam flow meter 68 is arranged at the connection 66 for measuring a flow of steam to be dumped. Instead of controlling the opening and closing of the butterfly damper 44 in dependence on the measured steam pressure, the control unit 50 of the boiler 62 is arranged to control the opening and closing of the butterfly damper 44 in dependence on the measured flow of steam in the connection 66.

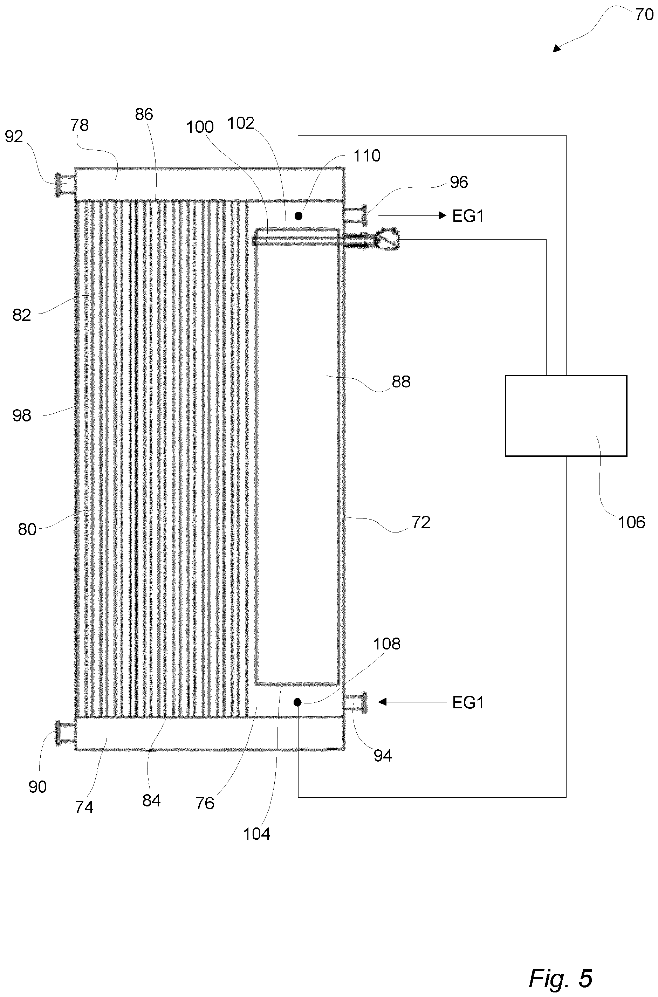

In Fig. 5 another boiler 70 is illustrated. The boiler 70 has some similarities to the boiler 2 and hereinafter the distinguishing features of the boiler 70 will be focused on. The boiler 70 is arranged onboard a ship (not illustrated) and connected to an external first exhaust gas source in the form of a diesel engine (not illustrated). Exhaust gas EG1 generated by the diesel engine is fed to the boiler 70 for exhaust gas heat recovery. The boiler 70 comprises a container 72, in turn comprising a lower chamber 74, a housing 76 and an upper chamber 78 arranged in succession in a vertical direction. The lower and upper chambers 74 and 78 and the housing 76 all have a circular cylindrical form and are integrally formed so as to have similar cross sections and be concentrically arranged.

The boiler 70 further comprises a third bundle 80 of tubes 82, which extend between a lower tube plate 84 and an upper tube plate 86, which plates form lower and upper walls of the housing 76 separating the housing 76 from the lower and upper chambers 74 and 78, and a parallel bypass pipe 88 extending inside the housing 76. The tubes 82 are arranged to convey water and steam through the housing 76, water being received by the boiler 70 through a medium inlet 90 extending into the lower chamber 74, and steam being discharged from the boiler 70 through a medium outlet 92 extending out of the upper chamber 78. The housing 76 and the bypass pipe 88 are arranged to convey exhaust gas EG1 through the boiler 70, which exhaust gas EG1 is received by the boiler 70 through an exhaust gas inlet 94 extending into a lower portion of the housing 76 and discharged from the boiler 70 through a (first) exhaust gas outlet 96 extending out of an upper portion of the housing 76.

During operation of the engine and the boiler 70, exhaust gas EG1 is fed through the housing 76. A circumferential wall 98 of the housing 76 serves as means for conveying the exhaust gas EG1 from the exhaust gas inlet 94 to the (first) exhaust gas outlet 96. Also, exhaust gas EG1 is possibly fed through the bypass pipe 88, as will be further discussed below. Inside the housing 76 exhaust gas EG1 surrounds and flows around the tubes 82 and the bypass pipe 88. Further, water is fed from the medium inlet 90 and into the tubes 82, and since the water is colder than the exhaust gas EG1, heat is transferred from the exhaust gas EG1, through walls of the tubes 82, to the water in the tubes 82 which is heated and leaves the boiler 70, in the form of steam or a mix of water and steam, through the medium outlet 92. Thus, the bundle 80 of tubes 82 serves as means for conveying the water and steam from the medium inlet 90 to the medium outlet 92.

When the engine is operated at design load or lower, the exhaust gas EG1 will be conveyed through the housing 76 outside the bypass pipe 88. However, if the engine is operated at a load above design load, the engine exhaust gas EG1 will be conveyed through the housing 76 also via the bypass pipe 88 to avoid a boiler exhaust gas pressure above 150mmWC. The exhaust gas flow through the bypass pipe 88 is regulated by means of a butterfly damper 100 arranged at an exhaust gas outlet 102 of the bypass pipe 88. An exhaust gas inlet 104 of the bypass pipe 88 is constantly open.

The boiler 70 comprises a control unit 106 connected to the butterfly damper 100 to control opening and closing of it based on a pressure difference between a first exhaust gas pressure measured upstream the bypass pipe 88 by means of a first pressure sensor 108 and a second exhaust gas pressure measured downstream the bypass pipe 88 by means of a second pressure sensor 110.

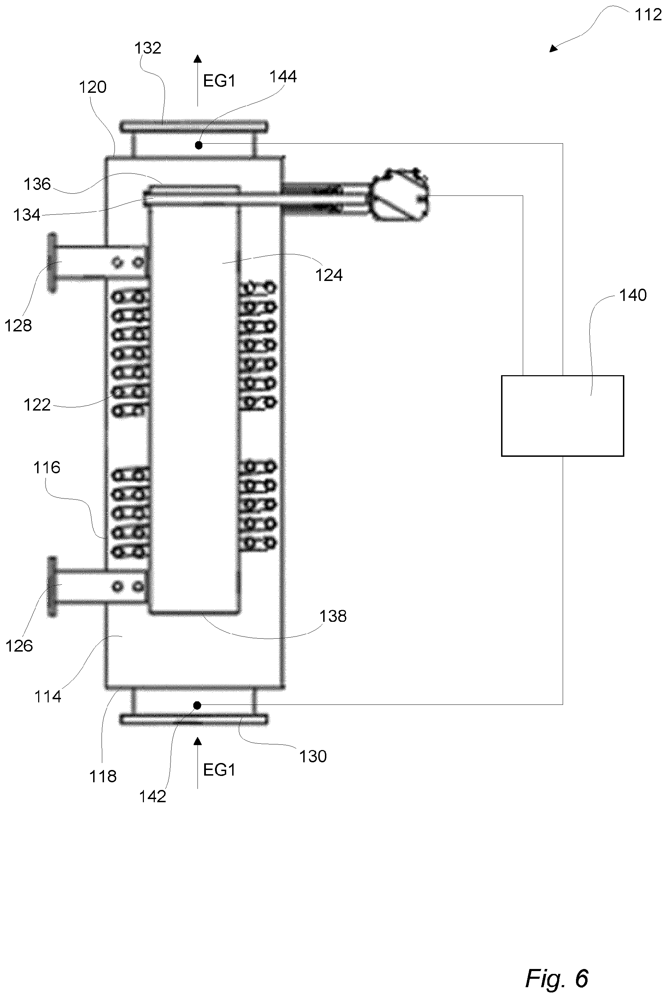

In Fig. 6 another boiler 112 is illustrated. The boiler 112 has similarities to the boiler 70 and hereinafter the distinguishing features of the boiler 112 will be focused on. The boiler 112 comprises a housing 114 defined by a cylindrical circumferential wall 116 and lower and upper walls 118 and 120, respectively. The boiler 112 further comprises a number of helical tubes 122 (here two), which extend around a bypass pipe 124 inside the housing 114. The tubes 122 are arranged to convey water and steam through the housing 114, water being received by the boiler 112 through a medium inlet 126 extending into a lower portion of the housing 114, and steam, or a mixture of steam and water, being discharged from the boiler 112 through a medium outlet 128 extending out of an upper portion of the housing 114. The housing 114 and the bypass pipe 124 are arranged to convey exhaust gas EG1 from a diesel engine (not illustrated) through the boiler 112, which exhaust gas EG1 is received by the boiler 112 through an exhaust gas inlet 130 extending through the lower wall 118 of the housing 114 and a (first) exhaust gas outlet 132 extending through the upper wall 120 of the housing 114.

The boiler 112 comprises a butterfly damper 134 arranged at an exhaust gas outlet 136 of the bypass pipe 124 for regulating an exhaust gas flow through the bypass pipe 124. An exhaust gas inlet 138 of the bypass pipe 124 is constantly open. Further, the boiler 112 comprises a control unit 140 connected to the butterfly damper 134 to control opening and closing of it based on a pressure difference between a first exhaust gas pressure measured upstream the bypass pipe 124 by means of a first pressure sensor 142 and a second exhaust gas pressure measured downstream the bypass pipe 124 by means of a second pressure sensor 144.

The above described embodiments of the present invention should only be seen as examples. A person skilled in the art realizes that the embodiments discussed can be varied and combined in a number of ways without deviating from the inventive conception.

As an example, the second pressure sensor could be omitted also in the boilers illustrated in Figs. 3-6. Additionally/alternatively, the first pressure sensor could be arranged upstream the exhaust gas inlet of the boiler to measure the engine back pressure.

As another example, also the boilers illustrated in Figs. 2 and 4-6 could comprise a third pressure sensor for measuring a steam pressure of steam discharged from the medium outlet. Similarly, also the boilers illustrated in Figs. 2, 3 and 5-6 could comprise a connection for steam dumping and a steam flow meter for measuring the amount of steam to be dumped.

The bypass regulator need not be designed as a butterfly damper but could be designed in any suitable way, for example as a gas damper, a single or multi blade damper, a louver damper, a guillotine damper or an inlet vane damper.

As an alternative to being arranged to block an end of the bypass pipe from the outside, the bypass regulator could instead be arranged inside the bypass pipe and/or be arranged to block the bypass pipe at an intermediate portion thereof.

It should be stressed that a description of details not relevant to the present invention has been omitted and that the figures are just schematic and not drawn according to scale. It should also be said that some of the figures have been more simplified than others. Therefore, some components may be illustrated in one figure but left out in another figure. Finally, as used herein, the prefixes "first", "second", "top", "bottom", "upper", "lower", "horizontal", "vertical" etc. are used only to distinguish between different components and pose no requirements as regards relative positioning or orientation.

## Claims

1. A boiler (2, 56, 58, 62, 70, 112) for transferring heat from exhaust gas (EG1, EG2) to a medium, the boiler (2, 56, 58, 62, 70, 112) comprising an exhaust gas inlet (26, 94, 130) for receiving exhaust gas (EG1) from an external first exhaust gas source (4), a first exhaust gas outlet (28, 96, 132) for discharging exhaust gas (EG1) from the external first exhaust gas source (4), means (16, 18, 76, 114) for conveying exhaust gas (EG1) from the external first exhaust gas source (4) from said exhaust gas inlet (26, 94, 130) to said first exhaust gas outlet (28, 96, 132), a medium inlet (38, 90, 126) for receiving the medium, a medium outlet (40, 92, 128) for discharging the medium, means (12, 82, 122) for conveying the medium from said medium inlet (38, 90, 126) to said medium outlet (40, 92, 128), a bypass pipe (20, 88, 124) for conveying exhaust gas (EG1) from the external first exhaust gas source (4) from said exhaust gas inlet (26, 94, 130) to said first exhaust gas outlet (28, 96, 132), which bypass pipe (20, 88, 124) is enclosed by a circumferential wall (42, 98, 116) of the boiler (2, 56, 58, 62, 70, 112), and a bypass regulator (44, 100, 134) arranged to block or unblock the bypass pipe (20, 88, 124) to regulate an exhaust gas flow through the bypass pipe (20, 88, 124), **characterized in** further comprising a first pressure sensor (52, 108, 142) for measuring a first exhaust gas pressure upstream the bypass pipe (20, 88, 124), and a control unit (50, 106, 140) communicating with the first pressure sensor (52, 108, 142) and the bypass regulator (44, 100, 134) and arranged to control the bypass regulator (44, 100, 134) in dependence on said first pressure, and further comprising a second pressure sensor (54, 110, 144) for measuring a second exhaust gas pressure downstream the bypass pipe (20, 88, 124), the control unit (50, 106, 140) further communicating with the second pressure sensor (54, 110, 144) and being arranged to control the bypass regulator (44, 100, 134) also in dependence on said second pressure.

2. Boiler (2, 56, 58, 62) according to claim 1, wherein said means (18) for conveying exhaust gas (EG1) from said exhaust gas inlet (26) to said first exhaust gas outlet (28) comprise a first bundle (16) of tubes (18), and said means (12) for conveying the medium from said medium inlet (38) to said medium outlet (40) comprise said circumferential wall (42) of the boiler (2, 56, 58, 62) enclosing said first bundle (16) of tubes (18).

3. Boiler (70, 112) according to claim 1, wherein said means (82, 122) for conveying the medium from said medium inlet (90, 126) to said medium outlet (92, 128) comprise one or more tubes (82, 122), and said means (76, 114) for conveying exhaust gas (EG1) from said exhaust gas inlet (94, 130) to said first exhaust gas outlet (96, 132) comprise said circumferential wall (98, 116) of the boiler (70, 112) enclosing said one or more tubes (82, 122).

4. Boiler (2, 58, 62, 70, 112) according to any of the preceding claims, wherein the second pressure sensor (54, 110, 144) is arranged upstream the first exhaust gas outlet (28, 96, 132) of the boiler (2, 58, 62, 70, 112).

5. Boiler (2, 58, 62, 70, 112) according to any of the preceding claims, wherein the first pressure sensor (52, 108, 142) is arranged downstream the exhaust gas inlet (26, 94, 130) of the boiler (2, 58, 62, 70, 112).

6. Boiler (56) according to any of claims 1-4, wherein the first pressure sensor (52) is arranged upstream the exhaust gas inlet (26) of the boiler (56) for measuring the first exhaust gas pressure before the boiler (56).

7. Boiler (2, 56, 58, 62, 70, 112) according to any of the preceding claims, wherein the bypass pipe (20, 88, 124) comprises an exhaust gas inlet (48, 104, 138) for receiving exhaust gas (EG1) and an exhaust gas outlet (46, 102, 136) for discharging exhaust gas (EG1), and the bypass regulator (44, 100, 134) is arranged to cover one of the exhaust gas inlet (48, 104, 138) and the exhaust gas outlet (46, 102, 136) of the bypass pipe (20, 88, 124) to block the bypass pipe (20, 88, 124).

8. Boiler (2, 56, 58, 62, 70, 112) according to claim 7, wherein the other one of the exhaust gas inlet (48, 104, 138) and the exhaust gas outlet (46, 102, 136) of the bypass pipe (20, 88, 124) is arranged to be constantly open.

9. Boiler (2, 56, 58, 62, 70, 112) according to any of claims 7-8, wherein the bypass regulator (44, 100, 134) is arranged to cover the exhaust gas outlet (46, 102, 136) of the bypass pipe (20, 88, 124) to block the bypass pipe (20, 88, 124).

10. Boiler (2, 56, 58, 62, 70, 112) according to any of the preceding claims, wherein the bypass regulator (44, 100, 134) comprises a butterfly damper (44, 100, 134).

11. Boiler (58) according to any of the preceding claims, further comprising a third pressure sensor (60) for measuring a steam pressure of steam discharged from the medium outlet (40), the control unit (50) further communicating with the third pressure sensor (60) and being arranged to control the bypass regulator (44) also in dependence on said steam pressure.

12. Boiler (62) according to any of the preceding claims, further comprising a connection (66), communicating with said medium outlet (40), for dumping of steam discharged from the medium outlet (40), and a steam flow meter (68) arranged to measure the amount of steam to be dumped, the control unit (50) further communicating with the steam flow meter (68) and being arranged to control the bypass regulator (44) also in dependence on said amount of steam.

13. Boiler (2, 56, 58, 62) according to any of the preceding claims, further comprising a second exhaust gas outlet (36) for discharging exhaust gas (EG2) from a second exhaust gas source, and a second bundle (32) of tubes (34) for conveying exhaust gas (EG2) from the second exhaust gas source to said second exhaust gas outlet (36), said circumferential wall (42) of the boiler (2, 56, 58, 62) enclosing said second bundle (32) of tubes (34).

14. A method of operating a boiler (2, 56, 58, 62, 70, 112) to transfer heat from exhaust gas (EG1, EG2) to a medium, comprising
conveying exhaust gas (EG1) from an external first exhaust gas source (4) from an exhaust gas inlet (26, 94, 130) to a first exhaust gas outlet (28, 96, 132) of the boiler (2, 56, 58, 62, 70, 112),
conveying the medium from a medium inlet (38, 90, 126) to a medium outlet (40, 92, 128) of the boiler (2, 56, 58, 62, 70, 112), **characterized in** further comprising
measuring a first exhaust gas pressure upstream a bypass pipe (20, 88, 124) of the boiler (2, 56, 58, 62, 70, 112), which bypass pipe (20, 88, 124) is arranged to convey exhaust gas (EG1) from the external first exhaust gas source (4) from said exhaust gas inlet (26, 94, 130) to said first exhaust gas outlet (28, 96, 132),
regulating, in dependence on said first exhaust gas pressure, an exhaust gas flow through the bypass pipe (20, 88, 124),
measuring a second exhaust gas pressure downstream the bypass pipe (20, 88, 124), and
regulating, also in dependence on said second pressure, the exhaust gas flow through the bypass pipe (20, 88, 124).

15. A method according to any of claims 14, further comprising
measuring a steam pressure of steam discharged from the medium outlet (40), and
regulating, also in dependence on said steam pressure, the exhaust gas flow through the bypass pipe (20).

16. A method according to any of claims 14-15, further comprising
measuring an amount of steam, discharged from the medium outlet (40), to be dumped, and
regulating, also in dependence on said amount of steam, the exhaust gas flow through the bypass pipe (20).

## Patentansprüche

1. Kessel (2, 56, 58, 62, 70, 112) zum Übertragen von Wärme von Abgas (EG1, EG2) zu einem Medium, wobei der Kessel (2, 56, 58, 62, 70, 112) einen Abgaseinlass (26, 94, 130) zum Aufnehmen von Abgas (EG1) aus einer externen ersten Abgasquelle (4), einen ersten Abgasauslass (28, 96, 132) zum Abgeben von Abgas (EG1) aus der externen ersten Abgasquelle (4), Mittel (16, 18, 76, 114) zum Befördern von Abgas (EG1) aus der externen ersten Abgasquelle (4) von dem Abgaseinlass (26, 94, 130) zu dem ersten Abgasauslass (28, 96, 132), einen Medieneinlass (38, 90, 126) zum Aufnehmen des Mediums, einen Medienauslass (40, 92, 128) zum Abgeben des Mediums, Mittel (12, 82, 122) zum Befördern des Mediums von dem Medieneinlass (38, 90, 126) zu dem Medienauslass (40, 92, 128), ein Umgehungsrohr (20, 88, 124) zum Befördern von Abgas (EG1) aus der externen ersten Abgasquelle (4) von dem Abgaseinlass (26, 94, 130) zu dem ersten Abgasauslass (28, 96, 132), bei dem das Umgehungsrohr (20, 88, 124) durch eine umlaufende Wand (42, 98, 116) des Kessels (2, 56, 58, 62, 70, 112) umschlossen wird, und einen Umgehungsregler (44, 100, 134), der angeordnet ist, um das Umgehungsrohr (20, 88, 124) zu sperren oder zu entsperren, um einen Abgasstrom durch das Umgehungsrohr (20, 88, 124) zu regulieren, umfasst, **dadurch gekennzeichnet, dass** er ferner einen ersten Drucksensor (52, 108, 142) zum Messen eines ersten Abgasdrucks stromaufwärts von dem Umgehungsrohr (20, 88, 124) und eine Steuereinheit (50, 106, 140), die mit dem ersten Drucksensor (52, 108, 142) und dem Umgehungsregler (44, 100, 134) in Verbindung steht und angeordnet ist, um den Umgehungsregler (44, 100, 134) in Abhängigkeit von dem ersten Druck zu steuern, umfasst und ferner einen zweiten Drucksensor (54, 110, 144) zum Messen eines zweiten Abgasdrucks stromabwärts von dem Umgehungsrohr (20, 88, 124) umfasst, wobei die Steuereinheit (50, 106, 140) ferner mit dem zweiten Drucksensor (54, 110, 144) in Verbindung steht und angeordnet ist, um den Umgehungsregler (44, 100, 134) ebenfalls in Abhängigkeit von dem zweiten Druck zu steuern.

2. Kessel (2, 56, 58, 62,) nach Anspruch 1, wobei die Mittel (18) zum Befördern von Abgas (EG1) von dem Abgaseinlass (26) zu dem ersten Abgasauslass (28) ein erstes Bündel (16) von Röhren (18) umfassen und die Mittel (12) zum Befördern des Mediums von dem Medieneinlass (38) zu dem Medienauslass (40) die umlaufende Wand (42) des Kessels (2, 56, 58, 62) umfassen, die das erste Bündel (16) von Röhren (18) umschließt.

3. Kessel (70, 112) nach Anspruch 1, wobei die Mittel (82, 122) zum Befördern des Mediums von dem Medieneinlass (90, 126) zu dem Medienauslass (92, 128) eine oder mehrere Röhren (82, 122) umfassen und die Mittel (76, 114) zum Befördern von Abgas (EG1) von dem Abgaseinlass (94, 130) zu dem ersten Abgasauslass (96, 132) die umlaufende Wand (98, 116) des Kessels (70, 112) umfassen, welche die eine oder die mehreren Röhren (82, 122) umschließt.

4. Kessel (2, 58, 62, 70, 112) nach einem der vorhergehenden Ansprüche, wobei der zweite Drucksensor (54, 110, 144) stromaufwärts von dem ersten Abgasauslass (28, 96, 132) des Kessels (2, 58, 62, 70, 112) angeordnet ist.

5. Kessel (2, 58, 62, 70, 112) nach einem der vorhergehenden Ansprüche, wobei der erste Drucksensor (52, 108, 142) stromabwärts von dem Abgaseinlass (26, 94, 130) des Kessels (2, 58, 62, 70, 112) angeordnet ist.

6. Kessel (56) nach einem der Ansprüche 1 bis 4, wobei der erste Drucksensor (52) stromaufwärts von dem Abgaseinlass (26) des Kessels (56) zum Messen des ersten Abgasdrucks vor dem Kessel (56) angeordnet ist.

7. Kessel (2, 56, 58, 62, 70, 112) nach einem der vorhergehenden Ansprüche, wobei das Umgehungsrohr (20, 88, 124) einen Abgaseinlass (48, 104, 138) zum Aufnehmen von Abgas (EG1) und einen Abgasauslass (46, 102, 136) zum Abgeben von Abgas (EG1) umfasst und der Umgehungsregler (44, 100, 134) angeordnet ist, um einen von dem Abgaseinlass (48, 104, 138) und dem Abgasauslass (46, 102, 136) des Umgehungsrohrs (20, 88, 124) abzudecken, um das Umgehungsrohr (20, 88, 124) zu sperren.

8. Kessel (2, 56, 58, 62, 70, 112) nach Anspruch 7, wobei der andere von dem Abgaseinlass (48, 104, 138) und dem Abgasauslass (46, 102, 136) des Umgehungsrohrs (20, 88, 124) angeordnet ist, um konstant offen zu sein.

9. Kessel (2, 56, 58, 62, 70, 112) nach einem der Ansprüche 7 bis 8, wobei der Umgehungsregler (44, 100, 134) angeordnet ist, um den Abgasauslass (46, 102, 136) des Umgehungsrohrs (20, 88, 124) abzudecken, um das Umgehungsrohr (20, 88, 124) zu sperren.

10. Kessel (2, 56, 58, 62, 70, 112) nach einem der vorhergehenden Ansprüche, wobei der Umgehungsregler (44, 100, 134) eine Drosselklappe (44, 100, 134) umfasst.

11. Kessel (58) nach einem der vorhergehenden Ansprüche, der ferner einen dritten Drucksensor (60) zum Messen eines Dampfdrucks von Dampf, der aus dem Medienauslass (40) abgegeben wird, umfasst, wobei die Steuereinheit (50) ferner mit dem dritten Drucksensor (60) in Verbindung steht und angeordnet ist, um den Umgehungsregler (44) ebenfalls in Abhängigkeit von dem Dampfdruck zu steuern.

12. Kessel (62) nach einem der vorhergehenden Ansprüche, der ferner eine Verbindung (66), die mit dem Medienauslass (40) in Verbindung steht, zum Ablassen von Dampf, der aus dem Medienauslass (40) abgegeben wird, und einen Dampfdurchflussmesser (68), der angeordnet ist, um die Menge von Dampf, der abgelassen werden soll, zu messen, umfasst, wobei die Steuereinheit (50) ferner mit dem Dampfdurchflussmesser (68) in Verbindung steht und angeordnet ist, um den Umgehungsregler (44) ebenfalls in Abhängigkeit von der Menge von Dampf zu steuern.

13. Kessel (2, 56, 58, 62) nach einem der vorhergehenden Ansprüche, der ferner einen zweiten Abgasauslass (36) zum Abgeben von Abgas (EG2) aus einer zweiten Abgasquelle und ein zweites Bündel (32) von Röhren (34) zum Befördern von Abgas (EG2) aus der zweiten Abgasquelle zu dem zweiten Abgasauslass (36) umfasst, wobei die umlaufende Wand (42) des Kessels (2, 56, 58, 62) das zweite Bündel (32) von Röhren (34) umschließt.

14. Verfahren zum Betreiben eines Kessels (2, 56, 58, 62, 70, 112), um Wärme von Abgas (EG1, EG2) zu einem Medium zu übertragen, wobei das Verfahren Folgendes umfasst:
Befördern von Abgas (EG1) aus einer externen ersten Abgasquelle (4) von einem Abgaseinlass (26, 94, 130) zu einem ersten Abgasauslass (28, 96, 132) des Kessels (2, 56, 58, 62, 70, 112),
Befördern des Mediums von einem Medieneinlass (38, 90, 126) zu einem Medienauslass (40, 92, 128) des Kessels (2, 56, 58, 62, 70, 112), **dadurch gekennzeichnet, dass** es ferner Folgendes umfasst:
Messen eines ersten Abgasdrucks stromaufwärts von einem Umgehungsrohr (20, 88, 124) des Kessels (2, 56, 58, 62, 70, 112), bei dem das Umgehungsrohr (20, 88, 124) angeordnet ist, um Abgas (EG1) aus der externen ersten Abgasquelle (4) von dem Abgaseinlass (26, 94, 130) zu dem ersten Abgasauslass (28, 96, 132) zu befördern,
Regulieren, in Abhängigkeit von dem ersten Abgasdruck, eines Abgasstroms durch das Umgehungsrohr (20, 88, 124),
Messen eines zweiten Abgasdrucks stromabwärts von dem Umgehungsrohr (20, 88, 124), und
Regulieren, ebenfalls in Abhängigkeit von dem zweiten Druck, des Abgasstroms durch das Umgehungsrohr (20, 88, 124).

15. Verfahren nach Anspruch 14, das ferner Folgendes umfasst:
Messen eines Dampfdrucks von Dampf, der aus dem Medienauslass (40) abgegeben wird, und
Regulieren, ebenfalls in Abhängigkeit von dem Dampfdruck, des Abgasstroms durch das Umgehungsrohr (20).

16. Verfahren nach einem der Ansprüche 14 bis 15, das ferner Folgendes umfasst:
Messen einer Menge von Dampf, der aus dem Medienauslass (40) abgegeben wird, um abgelassen zu werden, und
Regulieren, ebenfalls in Abhängigkeit von der Menge von Dampf, des Abgasstroms durch das Umgehungsrohr (20).

## Revendications

1. Chaudière (2, 56, 58, 62, 70, 112) permettant de transférer de la chaleur d'un gaz d'échappement (EG1, EG2) vers un milieu, la chaudière (2, 56, 58, 62, 70, 112) comprenant une entrée de gaz d'échappement (26, 94, 130) pour recevoir du gaz d'échappement (EG1) depuis une première source externe de gaz d'échappement (4), une première sortie de gaz d'échappement (28, 96, 132) pour évacuer le gaz d'échappement (EG1) de la première source externe de gaz d'échappement (4), des moyens (16, 18, 76, 114) pour transporter du gaz d'échappement (EG1) à partir de la première source externe de gaz d'échappement (4) de ladite entrée de gaz d'échappement (26, 94, 130) vers ladite première sortie de gaz d'échappement (28, 96, 132), une entrée de milieu (38, 90, 126) destinée à recevoir le milieu, une sortie de milieu (40, 92, 128) pour évacuer le milieu, des moyens (12, 82, 122) pour transporter le milieu de ladite entrée de milieu (38, 90, 126) vers ladite sortie de milieu (40, 92, 128), un tuyau de dérivation (20, 88, 124) pour transporter le gaz d'échappement (EG1) provenant de la première source externe de gaz d'échappement (4) de ladite entrée de gaz d'échappement (26, 94, 130) vers ladite première sortie de gaz d'échappement (28, 96, 132), lequel tuyau de dérivation (20, 88, 124) est entouré par une paroi circonférentielle (42, 98, 116) de la chaudière (2, 56, 58, 62, 70, 112), et un régulateur de dérivation (44, 100, 134) agencé pour obturer ou désobturer le tuyau de dérivation (20, 88, 124) pour réguler un écoulement de gaz d'échappement à travers le tuyau de dérivation (20, 88, 124), **caractérisée en ce qu'**elle comprend en outre un premier capteur de pression (52, 108, 142) pour mesurer une première pression de gaz d'échappement en amont du tuyau de dérivation (20, 88, 124), et une unité de commande (50, 106, 140) communiquant avec le premier capteur de pression (52, 108, 142) et le régulateur de dérivation (44, 100, 134) et agencée pour commander le régulateur de dérivation (44, 100, 134) en fonction de ladite première pression, et **en ce qu'**elle comprend en outre un deuxième capteur de pression (54, 110, 144) pour mesurer une deuxième pression de gaz d'échappement en aval du tuyau de dérivation (20, 88, 124), l'unité de commande (50, 106, 140) communiquant en outre avec le deuxième capteur de pression (54, 110, 144) et étant agencée pour commander le régulateur de dérivation (44, 100, 134) également en fonction de ladite deuxième pression.

2. Chaudière (2, 56, 58, 62) selon la revendication 1, dans laquelle lesdits moyens (18) pour transporter le gaz d'échappement (EG1) de ladite entrée de gaz d'échappement (26) vers ladite première sortie de gaz d'échappement (28) comprennent un premier faisceau (16) de tubes (18), et lesdits moyens (12) pour transporter le milieu de ladite entrée de milieu (38) vers ladite sortie de milieu (40) comprennent ladite paroi circonférentielle (42) de la chaudière (2, 56, 58, 62) entourant ledit premier faisceau (16) de tubes (18).

3. Chaudière (70, 112) selon la revendication 1, dans laquelle lesdits moyens (82, 122) pour transporter le milieu de ladite entrée de milieu (90, 126) vers ladite sortie de milieu (92, 128) comprennent un ou plusieurs tubes (82, 122), et lesdits moyens (76, 114) pour transporter le gaz d'échappement (EG1) de ladite entrée de gaz d'échappement (94, 130) vers ladite première sortie de gaz d'échappement (96, 132) comprennent ladite paroi circonférentielle (98, 116) de la chaudière (70, 112) entourant lesdits un ou plusieurs tubes (82, 122).

4. Chaudière (2, 58, 62, 70, 112) selon l'une quelconque des revendications précédentes, dans laquelle le deuxième capteur de pression (54, 110, 144) est agencé en amont de la première sortie de gaz d'échappement (28, 96, 132) de la chaudière (2, 58, 62, 70, 112).

5. Chaudière (2, 58, 62, 70, 112) selon l'une quelconque des revendications précédentes, dans laquelle le premier capteur de pression (52, 108, 142) est agencé en aval de l'entrée de gaz d'échappement (26, 94, 130) de la chaudière (2, 58, 62, 70, 112).

6. Chaudière (56) selon l'une quelconque des revendications 1 à 4, dans laquelle le premier capteur de pression (52) est agencé en amont de l'entrée de gaz d'échappement (26) de la chaudière (56) pour mesurer la première pression de gaz d'échappement avant la chaudière (56).

7. Chaudière (2, 56, 58, 62, 70, 112) selon l'une quelconque des revendications précédentes, dans laquelle le tuyau de dérivation (20, 88, 124) comprend une entrée de gaz d'échappement (48, 104, 138) pour recevoir du gaz d'échappement (EG1) et une sortie de gaz d'échappement (46, 102, 136) pour évacuer le gaz d'échappement (EG1), et le régulateur de dérivation (44, 100, 134) est agencé pour couvrir l'une parmi l'entrée de gaz d'échappement (48, 104, 138) et la sortie de gaz d'échappement (46, 102, 136) du tuyau de dérivation (20, 88, 124) pour obturer le tuyau de dérivation (20, 88, 124).

8. Chaudière (2, 56, 58, 62, 70, 112) selon la revendication 7, dans laquelle l'autre parmi l'entrée de gaz d'échappement (48, 104, 138) et la sortie de gaz d'échappement (46, 102, 136) du tuyau de dérivation (20, 88, 124) est agencée pour être constamment ouverte.

9. Chaudière (2, 56, 58, 62, 70, 112) selon l'une quelconque des revendications 7 à 8, dans laquelle le régulateur de dérivation (44, 100, 134) est agencé pour couvrir la sortie de gaz d'échappement (46, 102, 136) du tuyau de dérivation (20, 88, 124) pour obturer le tuyau de dérivation (20, 88, 124).

10. Chaudière (2, 56, 58, 62, 70, 112) selon l'une quelconque des revendications précédentes, dans laquelle le régulateur de dérivation (44, 100, 134) comprend un registre papillon (44, 100, 134).

11. Chaudière (58) selon l'une quelconque des revendications précédentes, comprenant en outre un troisième capteur de pression (60) pour mesurer une pression de vapeur d'eau de vapeur d'eau évacuée de la sortie de milieu (40), l'unité de commande (50) communiquant en outre avec le troisième capteur de pression (60) et étant agencée pour commander le régulateur de dérivation (44) également en fonction de ladite pression de vapeur d'eau.

12. Chaudière (62) selon l'une quelconque des revendications précédentes, comprenant en outre un raccordement (66) communiquant avec ladite sortie de milieu (40), pour déverser de la vapeur d'eau évacuée de la sortie de milieu (40), et un débitmètre de vapeur d'eau (68) agencé pour mesurer la quantité de vapeur d'eau à déverser, l'unité de commande (50) communiquant en outre avec le débitmètre de vapeur d'eau (68) et étant agencée pour commander le régulateur de dérivation (44) également en fonction de ladite quantité de vapeur d'eau.

13. Chaudière (2, 56, 58, 62) selon l'une quelconque des revendications précédentes, comprenant en outre une deuxième sortie de gaz d'échappement (36) pour évacuer le gaz d'échappement (EG2) provenant d'une deuxième source de gaz d'échappement, et un deuxième faisceau (32) de tubes (34) pour transporter le gaz d'échappement (EG2) de la deuxième source de gaz d'échappement vers ladite deuxième sortie de gaz d'échappement (36), ladite paroi circonférentielle (42) de la chaudière (2, 56, 58, 62) entourant ledit deuxième faisceau (32) de tubes (34).

14. Procédé d'exploitation d'une chaudière (2, 56, 58, 62, 70, 112) permettant de transférer de la chaleur d'un gaz d'échappement (EG1, EG2) vers un milieu, comprenant
le transport du gaz d'échappement (EG1) d'une première source externe de gaz d'échappement (4) depuis une première entrée de gaz d'échappement (26, 94, 130) vers une première sortie de gaz d'échappement (28, 96, 132) de la chaudière (2, 56, 58, 62, 70, 112),
le transport du milieu depuis une entrée de milieu (38, 90, 126) vers une sortie de milieu (40, 92, 128) de la chaudière (2, 56, 58, 62, 70, 112), **caractérisé en ce qu'**il comprend en outre
la mesure d'une première pression de gaz d'échappement en amont d'un tuyau de dérivation (20, 88, 124) de la chaudière (2, 56, 58, 62, 70, 112), lequel tuyau de dérivation (20, 88, 124) est agencé pour transporter du gaz d'échappement (EG1) de la première source externe de gaz d'échappement (4) depuis ladite entrée de gaz d'échappement (26, 94, 130) vers ladite sortie de gaz d'échappement (28, 96, 132),
la régulation, en fonction de ladite première pression de gaz d'échappement, d'un écoulement de gaz d'échappement à travers le tuyau de dérivation (20, 88, 124),
la mesure d'une deuxième pression de gaz d'échappement en aval du tuyau de dérivation (20, 88, 124), et
la régulation, également en fonction de ladite deuxième pression, de l'écoulement de gaz d'échappement à travers le tuyau de dérivation (20, 88, 124).

15. Procédé selon la revendication 14, comprenant en outre
la mesure d'une pression de vapeur d'eau de vapeur d'eau évacuée de la sortie de milieu (40), et
la régulation, également en fonction de ladite pression de vapeur d'eau, de l'écoulement de gaz d'échappement à travers le tuyau de dérivation (20).

16. Procédé selon l'une quelconque des revendications 14 à 15, comprenant en outre
la mesure d'une quantité de vapeur d'eau, évacuée de la sortie de milieu (40), à déverser, et
la régulation, également en fonction de ladite quantité de vapeur d'eau, de l'écoulement de gaz d'échappement à travers le tuyau de dérivation (20).
